# EUROPÄISCHE PATENTANMELDUNG

(11) **EP 1 216 879 A1**
(43) Veröffentlichungstag der Anmeldung: **26.06.2002**
(21) Anmeldenummer: 01127181.4
(22) Anmeldetag: 16.11.2001
(51) Int. Cl.: B60N 2/24, B60N 2/12, B61D 33/00

(54) **Fahrgastsitz für Personenbeförderungsfahrzeuge**

(30) Priorität: 22.12.2000 DE 10064575
(71) Anmelder: Vogel Industrie GmbH, 76228 Karlsruhe (DE)
(72) Erfinder: Ehemann, Ernst K. Dipl.-Ing., 76227 Karlsruhe (DE); Bilfinger, Jan, 76228 Karlsruhe (DE)
(74) Vertreter: Dimmerling, Heinz, Dipl.-Ing.

(57) **Zusammenfassung**

Ein Fahrgastsitz für Personenbeförderungsfahrzeuge, insbesondere für Busse und Bahnen weist eine verschwenkbare Rückenlehne 1 und ein Sitzelement 2 auf. Das Sitzelement 2 ist beweglich gelagert. Es sind Mittel 3 vorhanden, durch welche das Sitzelement 2 beim Verschieben nach vorne in seinem vorderen Bereich anhebbar und/oder in seinem hinteren Bereich absenkbar ist.

## Beschreibung

Die Erfindung betrifft ein Fahrgastsitz nach dem Oberbegriff des Anspruchs 1, für Personenbeförderungsfahrzeuge, insbesondere für Busse und Bahnen, mit einer verschwenkbaren Rückenlehne und einem Sitzelement, welches beweglich gelagert ist.

Ein derartiger Fahrgastsitz ist beispielsweise aus der WO 00/29249 A1 bekannt, da er regelmäßig in Reisebussen oder Bahnen Verwendung findet. Durch die Verschwenkung der Rückenlehne und der damit verbundenen Verschiebung des Sitzelements in Sitzrichtung ist es einem Fahrgast möglich, den Sitz in eine Ruheposition zu bringen. Dies ist insbesondere für den Fahrgast dann angenehm, wenn sich der Fahrgast vollständig entspannen möchte. Durch eine nach hinten verschwenkte Rückenlehne und ein nach vorne verschobenes Sitzelement kann der Fahrgast eine Position erreichen, welche es ihm ermöglicht, etwas zu schlafen.

Wenngleich die bekannten Fahrgastsitze auch bereits einen großen Komfort bieten, so haftet ihnen dennoch der Nachteil an, daß bedingt durch die Schräglage der Rükkenlehne der Winkel zwischen Rückenlehne und Sitzelement so groß ist, daß der Fahrgast auf dem Sitzelement nach vorne gleitet beziehungsweise der Fahrgast ein Gleiten nach vorne durch Abstützen mit den Füßen auf dem Boden des Fahrzeugs verhindern muß. Dies stört das Wohlbefinden des Fahrgastes, da sich dieser völlig entspannt auf dem Fahrgastsitz niederlassen möchte.

Aus der WO 00/29249 A1 ist ein Fahrgastsitz bekannt, bei welchem das Sitzteil und das Rückenteil über eine Zwangsführung miteinander verbunden sind. Hierdurch wird erreicht, daß Rückenlehne und Sitzteil jeweils abhängig voneinander verstellt werden können. Zum Verstellen der Sitzposition sind Stellantriebe vorgesehen, die an der Unterseite des Sitzteils angreifen. Die Zwangsführung ist als Kulissenführung ausgebildet. Hierzu sind sowohl das Sitzteil als auch das Rückenteil jeweils mit Abstand zu einer Gelenkachse mit einer Führungsachse in einer Führungs- oder Kulissenbahn geführt.

Das Sitzteil und das Rückenteil sind jeweils um ihre Führungsachsen oder Führungszapfen verdrehbar in ihren Führungsbahnen gehalten. Während mittels eines ersten Stellantriebs die Neigung der aus Sitzteil und Rückenteil gebildeten Sitzschale insgesamt verändert und damit auch der Neigungswinkel des Rückenteils verstellt werden kann, kann mit Hilfe eines zweiten Stellantriebs der Winkel zwischen Sitzteil und Rückenlehne verstellt werden.

Des weiteren ist aus der DE 44 15 585 A1 eine Stabilisierungsvorrichtung für Fahrgastsitze eines Fahrzeugs bekannt, bei welcher das Sitzteil durch einen elektromotorischen Antrieb in Längs- oder in Querrichtung verschwenkt werden kann. Durch die Verschwenkung sollen Fliehkräfte ausgeglichen werden.

Es ist Aufgabe der Erfindung, einen eingangs genannten Fahrgastsitz derart auszubilden, daß beim Verschwenken der Rückenlehne auf einfache und zuverlässige Weise eine Verschwenkung des Sitzteils erfolgt.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist ein Fahrgastsitz für Personenbeförderungsfahrzeuge, insbesondere für Busse und Bahnen, mit einer verschwenkbaren Rückenlehne und einem beweglich gelagerten Sitzelement, bei welchem Mittel vorhanden sind, durch welche das Sitzelement beim Verschwenken der Rückenlehne nach hinten in seinem vorderen, der Rückenlehne abgewandten Bereich anhebbar und/oder in seinem hinteren, der Rückenlehne zugewandten Bereich absenkbar ist, dadurch gekennzeichnet, daß das Sitzelement auf einem Bodenelement angeordnet ist, welches im vorderen Bereich eine Anhebung aufweist.

Dadurch, daß Mittel vorhanden sind, durch welche das Sitzelement beim Verschieben nach vorne im vorderen Bereich anhebbar und/oder im hinteren Bereich absenkbar ist, wird in vorteilhafter Weise erreicht, daß der zwischen Rückenlehne und Sitzelement vorhandene Winkel sich etwas verringert. Hierdurch werden die Kräfte, durch welche der Fahrgast auf dem Sitzelement nach vome rutscht, verringert beziehungsweise aufgehoben. Durch die Anhebung des vorderen Bereichs und/oder der Absenkung des hinteren Bereichs des Sitzelements braucht der Fahrgast somit keine Maßnahmen zu ergreifen, durch die er ein Gleiten nach vorne auf dem Sitzelement verhindert. Er kann somit in der Ruheposition des Fahrgastsitzes vollkommen entspannt auf dem Sitz verweilen.

Als besonders vorteilhaft hat sich herausgestellt, daß das Sitzelement auf einem Bodenelement angeordnet ist, welches bis auf seinen vorderen Bereich eben ist und dessen vorderer Bereich nach oben verläuft. Dadurch, daß der vordere Bereich des Bodenelements nach oben verläuft, wird das Sitzelement bei einer Verschiebung nach vorne zwangsgesteuert im vorderen Bereich angehoben. Eine derartige Ausführungsform läßt sich zum einen auf einfache Weise herstellen und ist zum anderen sehr zuverlässig.

Besonders vorteilhaft ist es, wenn der vordere Bereich des Bodenelements einen kurvenförmigen Verlauf hat. Hierdurch ist es möglich, den Winkel zwischen der Rükkenlehne und dem Sitzelement für jede Position der Rückenlehne nach physiologischen Gesichtspunkten einzustellen. Der vordere Bereich des Bodenelements kann beispielsweise kreisabschnittsförmig ausgebildet sein oder als Gerade wie eine schiefe Ebene ausgebildet sein.

Als besonders vorteilhaft hat sich auch eine Ausführungsform der Erfindung herausgestellt, bei der wenigstens der vordere Teil des Sitzelements auf Rollen auf dem Bodenelement angeordnet ist. Hierdurch wird eine sehr leichte Bedienung des Fahrgastsitzes erreicht. Zusätzlich zum vorderen Teil des Sitzelementes kann auch der hintere Teil des Sitzes auf Rollen angeordnet sein.

Bei einer derartigen Ausführungsform ist es in vorteilhafter Weise auch möglich, das Sitzelement nach oben zu klappen, wodurch sich der Freiraum, beispielsweise zu einem vorderen Sitz vergrößert. Dies ist insbesondere sehr vorteilhaft bei Reinigungsarbeiten oder beim Ein- und Aussteigen. Durch das Verschieben des Sitzelements nach vorne wird des weiteren in vorteilhafter Weise erreicht, daß sich die nutzbare Fläche des Sitzelements vergrößert.

Bei einer weiteren besonderen Ausführungsform der Erfindung ist das Sitzelement auf einem Trägerelement angeordnet, welches in seinem vorderen Bereich mittels eines Hebels an einem Untergestell angelenkt ist. Dadurch, daß das Trägerelement in seinem vorderen Bereich mittels eines Hebels an einem Untergestell angelenkt ist, wird in vorteilhafter Weise erreicht, daß sich der vordere Bereich des Trägerelements hebt, wenn das Trägerelement nach vorne bewegt wird. Denn, da der Hebel um einen Schwenkpunkt am Untergestell geschwenkt wird, verläuft das andere Ende des Hebels, welches mit dem Trägerelement verbunden ist, auf einer Kreisbahn. Hierdurch wird das Trägerelement nicht nur nach vorne bewegt, sondern auch nach oben.

Der Vorteil der letztgenannten Ausführungsform besteht darin, daß der vordere Bereich des Sitzelementes seinen Abstand zum Boden beibehält. Hierdurch wird in vorteilhafter Weise erreicht, daß Passagiere mit kleiner Körpergröße, mit ihren Füßen auch dann auf dem Boden bleiben, wenn die Rückenlehne nach hinten verschwenkt wird. Des weiteren wird in vorteilhafter Weise erreicht, daß sich der Freiraum zwischen den Knien eines Passagiers und beispielsweise der Rückenlehne eines Vordersitzes nicht verringert, wodurch vermieden wird, daß der Passagier mit seinen Knien an die Rückenlehne des Vordersitzes stößt.

Als besonders vorteilhaft hat sich auch eine Ausführungsform der Erfindung herausgestellt, bei der das Sitzelement auf einem Grundelement angeordnet ist, welches in seinem hinteren Bereich eine Absenkung aufweist. Durch die Absenkung wird erreicht, daß sich der hintere Bereich des Sitzelements nach unten neigt, wenn sich die Abstützung des Sitzelements auf dem Grundelement in der Absenkung befindet. Hierdurch wird ebenfalls der Winkel zwischen der Rückenlehne und dem Sitzelement verkleinert, wodurch der Fahrgast einen besseren Halt auf dem Sitzelement hat. Es reicht zwar aus, daß das Grundelement nur die Absenkung aufweist, jedoch kann das Grundelement zusätzlich zur Absenkung in seinem vorderen Bereich noch eine Anhebung aufweisen, wie dies bei der ersten Ausführungsform der Erfindung der Fall ist.

Als besonders vorteilhaft hat sich eine Ausführungsform herausgestellt, bei der die Absenkung einen kurvenförmigen Verlauf hat. Hierdurch ist es möglich, den Winkel zwischen der Rückenlehne und dem Sitzelement für jede Position der Rückenlehne nach physiologischen Gesichtspunkten einzustellen. Die Absenkung kann beispielsweise kreisabschnittsförmig ausgebildet sein oder als Gerade wie eine schiefe Ebene ausgebildet sein.

Besonders vorteilhaft ist auch eine Ausführungsform der Erfindung, bei der wenigstens der hintere Teil des Sitzelements auf Rollen auf dem Grundelement angeordnet ist. Hierdurch wird eine sehr leichte Bedienung des Fahrgastsitzes erreicht. Selbstverständlich kann auch der vordere Teil des Sitzelements auf Rollen angeordnet sein.

Als sehr vorteilhaft hat sich auch eine Ausführungsform der Erfindung herausgestellt, bei der das Sitzelement auf einer Bodenplatte angeordnet ist, welche im vorderen Bereich um eine Schwenkachse schwenkbar an einem Träger befestigt ist. Hierdurch läßt sich der hintere Bereich des Sitzelements auf einfache Weise anheben oder absenken. Dies läßt sich in vorteilhafter Weise dadurch erreichen, daß die Bodenplatte im hinteren Bereich an einem Unterflurhebel der Rückenlehne dreh- und verschiebbar befestigt ist, wie dies bei einer weiteren besonderen Ausführungsform der Erfindung vorgesehen ist. Die Befestigung an dem Unterflurhebel muß dabei so erfolgen, daß die Bewegung des Befestigungspunktes beim Verschwenken der Rückenlehne eine senkrechte Komponente hat. Durch die senkrechte Komponente wird die Bodenplatte angehoben beziehungsweise abgesenkt.

Besonders vorteilhaft ist auch eine Ausführungsform, bei der die Bodenplatte im hinteren Bereich mittels eines Hebels mit einem Unterflurhebel der Rückenlehne verbunden ist. Durch die Verbindung der Bodenplatte mit dem Unterflurhebel mittels eines Hebels wird in vorteilhafter Weise erreicht, daß der Hebel an einer Stelle des Unterflurhebels der Rückenlehne angelenkt werden kann, welche keine senkrechte Bewegungskomponente hat. Dies wirkt sich vorteilhaft auf die Baugröße des Fahrgastsitzes aus.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt
- Fig. 1: eine erste Ausführungsform eines erfindungsgemäßen Fahrgastsitzes in Grundposition in schematischer Darstellung von der Seite,
- Fig. 2: den in Figur 1 dargestellten Fahrgastsitz in Ruheposition,
- Fig. 3: eine zweite Ausführungsform eines erfindungsgemäßen Fahrgastsitzes in Grundposition in schematischer Darstellung von der Seite,
- Fig. 4: den in Figur 3 dargestellten Fahrgastsitz in Ruheposition,
- Fig. 5: eine dritte Ausführungsform eines erfindungsgemäßen Fahrgastsitzes in Grundposition in schematischer Darstellung von der Seite,
- Fig. 6: den in Figur 5 dargestellten Fahrgastsitz in Ruheposition,
- Fig. 7: eine vierte Ausführungsform eines erfindungsgemäßen Fahrgastsitzes in Grundposition in schematischer Darstellung von der Seite,
- Fig. 8: den in Figur 7 dargestellten Fahrgastsitz in Ruheposition, eine dritte Ausführungsform eines erfindungsgemäßen Fahrgastsitzes in Grund-position in schematischer Darstellung von der Seite,
- Fig. 9: eine fünfte Ausführungsform eines erfindungsgemäßen Fahrgastsitzes in Grundposition in schematischer Darstellung von der Seite und
- Fig. 10: den in Figur 9 dargestellten Fahrgastsitz in Ruheposition.

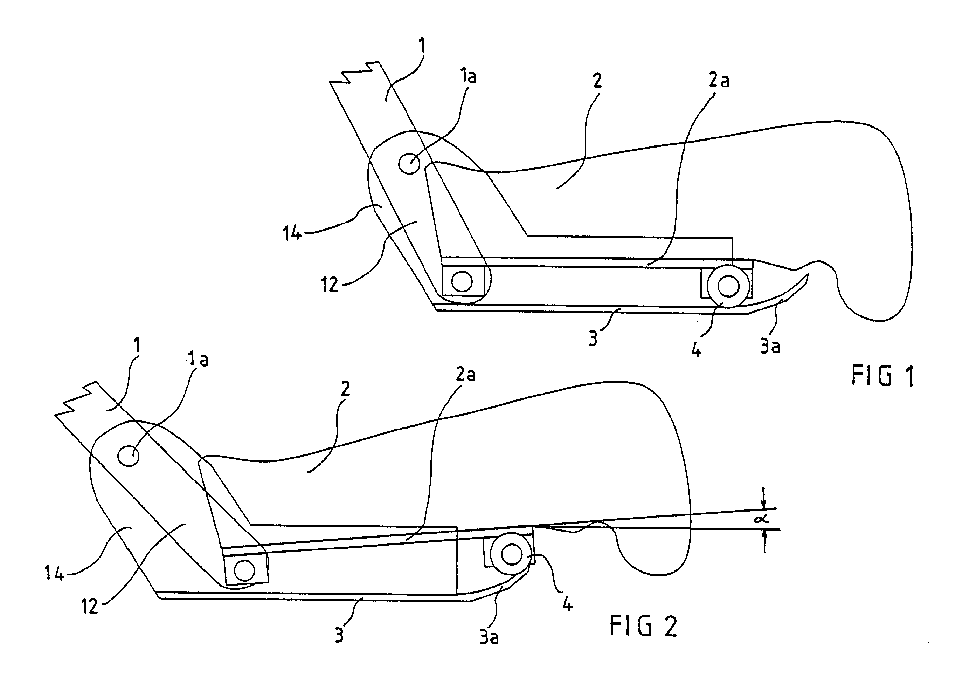

Wie den Figuren 1 und 2 entnommen werden kann, ist eine Rückenlehne 1 um eine Achse 1a schwenkbar an einem Seitenwinkel 8 eines Fahrgastsitzes befestigt. Ein Sitzelement 2 ist auf einer Bodenplatte 2a angeordnet. Die Bodenplatte 2a weist in ihrem vorderen Bereich Rollen 4 auf, mittels der sie auf einem Bodenelement 3, 3a angeordnet ist.

Die Bodenplatte 2a ist in ihrem hinteren Bereich gelenkig mit der Rückenlehne 1 verbunden.

Das Bodenelement 3, 3a weist einen vorderen Bereich 3a auf, welcher sich kreisbogenförmig nach oben erstreckt.

Wie insbesondere der Figur 2 entnommen werden kann, wird die Bodenplatte 2a und damit das Sitzelement 2 in Sitzrichtung nach vorne verschoben, wenn die Rückenlehne 1 nach hinten verschwenkt wird. Hierdurch folgen die Rollen 4 dem kreisbogenförmigen vorderen Bereich 3a des Bodenelements, wodurch die Bodenplatte 2a und damit das Sitzelement 2 im vorderen Bereich angehoben werden. Der Winkel, den die Bodenplatte 2a und damit das Sitzelement 2 nach einem Verschwenken der Rückenlehne 1 gegenüber der in Figur 1 dargestellten Normalposition einnimmt, ist in Figur 2 mit α bezeichnet.

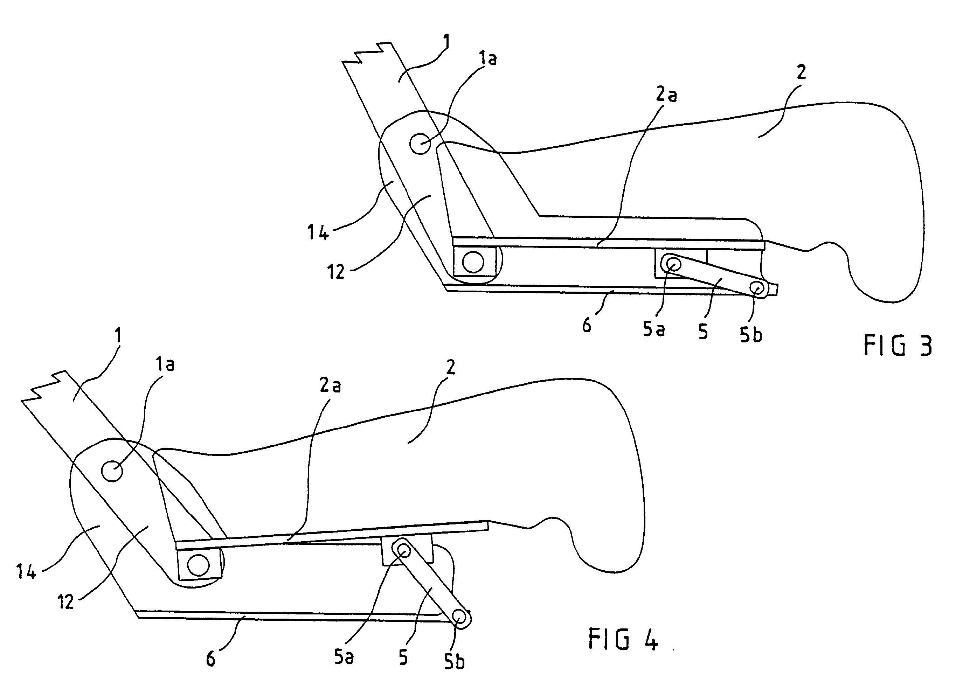

Der in den Figuren 3 und 4 dargestellte Fahrgastsitz entspricht bis auf die Sitzanhebung dem in den Figuren 1 und 2 darstellten Fahrgastsitz. Gleiche Teile sind daher mit gleichen Bezugszeichen versehen.

Wie den Figuren 3 und 4 entnommen werden kann, ist ein Sitzelement 2 auf einem als Bodenplatte 2a ausgebildeten Trägerelement angeordnet. Die Bodenplatte 2a ist in ihrem hinteren Bereich gelenkig mit einer Rückenlehne 1 verbunden, welche um eine Achse 1a schwenkbar mit einem Seitenwinkel 14 des Fahrgastsitzes verbunden ist. Der vordere Bereich der Bodenplatte 2a ist schwenkbar mit einem Ende eines Hebels 5 verbunden, dessen anderes Ende schwenkbar mit einem Untergestell 6 des Fahrgastsitzes verbunden ist.

Durch die Anlenkung der Bodenplatte 2a mittels des Hebels 5 an dem Untergestell 6 verläuft der vordere Bereich der Bodenplatte 2a beim Verschieben der Bodenplatte 2a in Sitzrichtung nach vorne auf einer Kreisbahn um den Anlenkpunkt des Hebels 5 an dem Untergestell 6. Hierdurch wird der vordere Bereich der Bodenplatte 2a sowie des Sitzelements 2 bei einem Verschieben der Bodenplatte 2a nach vorne angehoben.

Ebenso wie bei den in den Figuren 1 und 2 dargestellten Ausführungsform wird das Sitzelement 2 nach vorne verschoben, wenn die Rückenlehne 1 nach hinten verschwenkt wird.

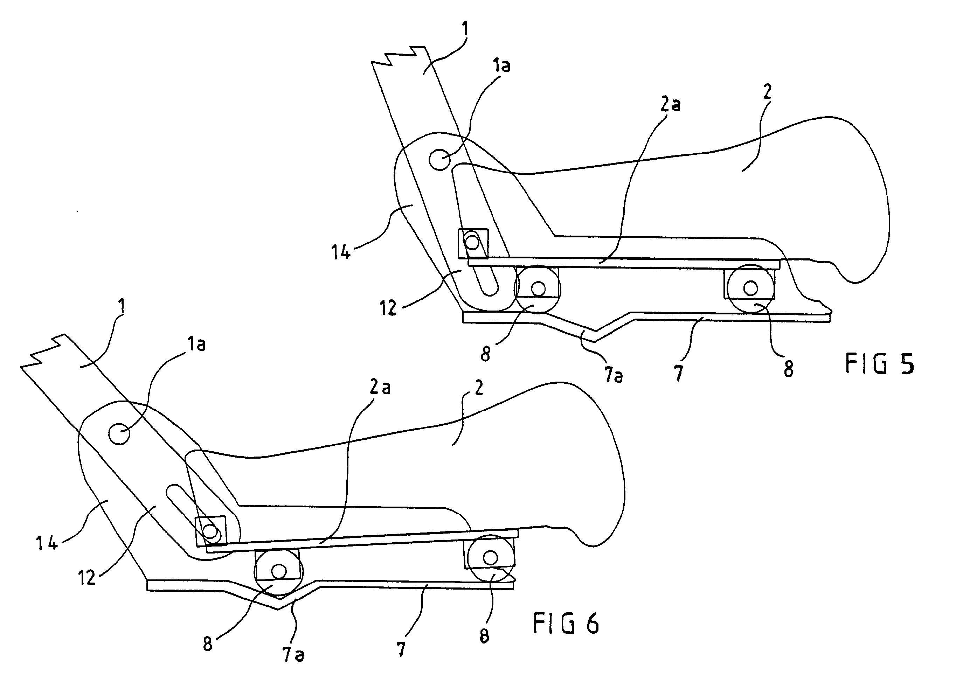

Der in den Figuren 5 und 6 dargestellte Fahrgastsitz entspricht bis auf die Sitzabsenkung dem in den Figuren 1 und 2 dargestellten Fahrgastsitz. Gleiche Teile sind daher mit gleichen Bezugszeichen versehen.

Wie den Figuren 5 und 6 entnommen werden kann, ist ein Sitzelement 2 auf einer Bodenplatte 2a angeordnet, welche über Rollen 8 auf einem Grundelement 7, 7a abgestützt ist. Die Bodenplatte 2a ist schwenk- und verschiebbar mit einem Unterflurhebel 12 der Rückenlehne 1 verbunden. Hierdurch wird die Bodenplatte 2a und somit das Sitzelement 2 nach vorne verschoben, wenn die Rückenlehne 1 um ihren Schwenkpunkt 1a nach hinten verschwenkt wird.

Das Grundelement 7, 7a weist in seinem hinteren Bereich eine Absenkung 7a auf. Die Absenkung 7a ist durch schiefe Ebenen gebildet, sie kann aber auch einen kurvenförmigen Verlauf haben.

Wie insbesondere Figur 6 entnommen werden kann, gelangen die hinteren Rollen 8 in die Absenkung 7a, wenn die Rückenlehne 1 nach hinten verschwenkt und dadurch die Bodenplatte 2a nach vorne verschoben wird. Hierdurch wird der hintere Bereich des Sitzelements 2 abgesenkt. Durch die Absenkung des hinteren Bereichs des Sitzelements 2 kann im wesentlichen vermieden werden, daß der vordere Bereich des Sitzelements 2 angehoben wird.

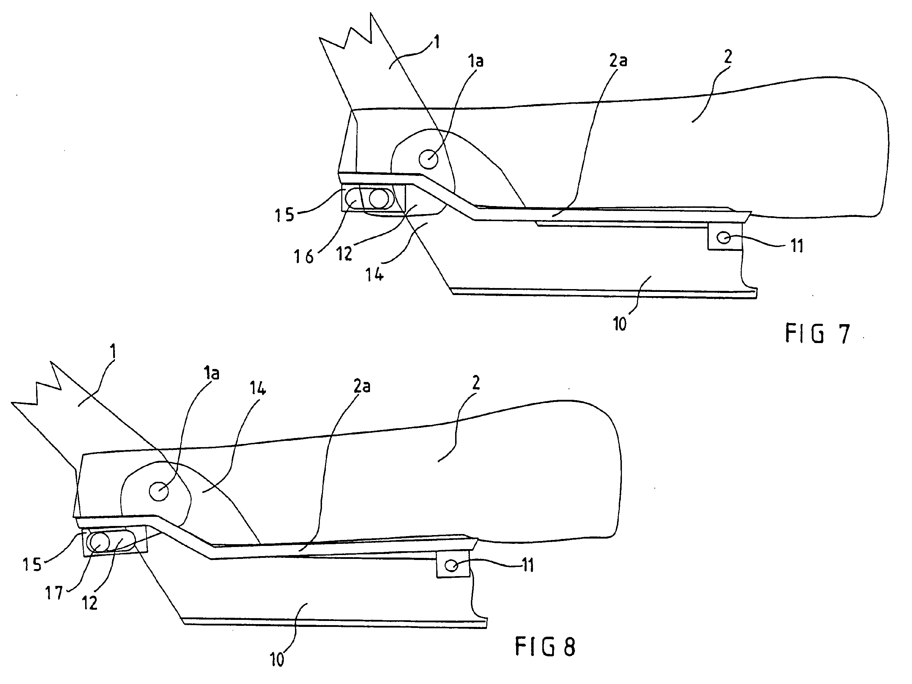

Der in den Figuren 7 und 8 dargestellte Fahrgastsitz entspricht bis auf die Sitzabsenkung dem in den Figuren 1 und 2 dargestellten Fahrgastsitz. Gleiche Teile sind daher mit gleichen Bezugszeichen versehen.

Wie den Figuren 7 und 8 entnommen werden kann, ist die Bodenplatte 2a in ihrem vorderen Bereich um eine Schwenkachse 11 schwenkbar an einem Träger 10 befestigt. In ihrem hinteren Bereich ist die Bodenplatte 2a mittels eines Winkels 15, welcher ein Langloch 16 aufweist, durch welches sich ein Bolzen 17 erstreckt, dreh- und verschiebbar an dem Unterflurhebel 12 der Rückenlehne 1 befestigt. Der Befestigungspunkt ist so gewählt, daß er beim Verschwenken der Rückenlehne 1 um ihren Schwenkpunkt 1a eine Auf- oder Abwärtsbewegung macht. Hierdurch wird der hintere Bereich der Bodenplatte 2a und somit auch das Sitzelement 2 beim Verschwenken der Rückenlehne 1 um ihren Schwenkpunkt 1a abgesenkt beziehungsweise angehoben. Die Stellung, in der der hintere Bereich des Sitzelements 2 abgesenkt ist, ist in Figur 8 dargestellt.

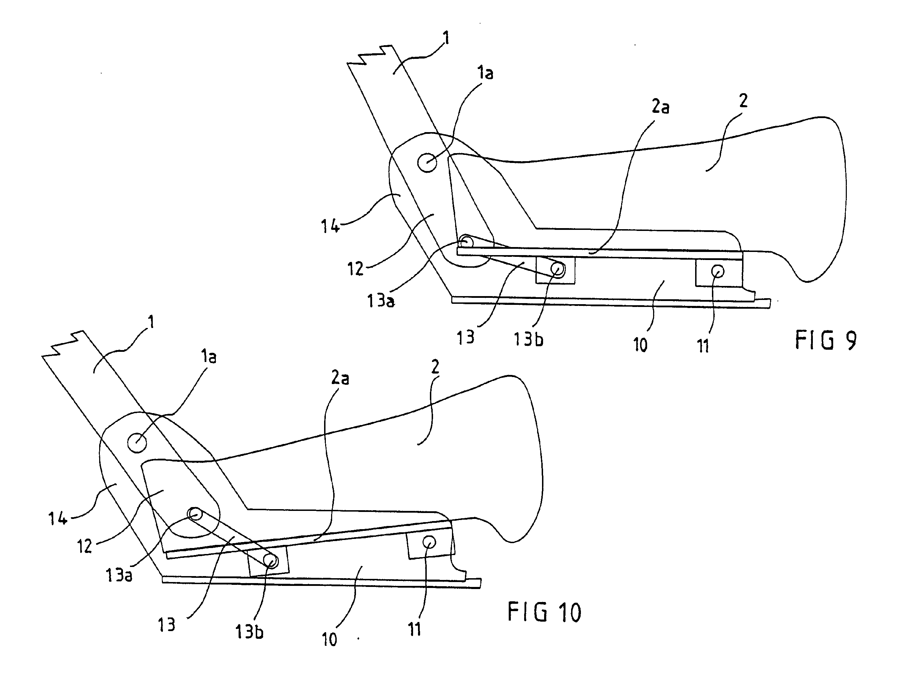

Der in den Figuren 9 und 10 dargestellte Fahrgastsitz entspricht bis auf die Sitzabsenkung dem in den Figuren 1 und 2 dargestellten Fahrgastsitz. Gleiche Teile sind daher mit gleichen Bezugszeichen versehen.

Wie den Figuren 9 und 10 entnommen werden kann, ist die Bodenplatte 2a in ihrem hinteren Bereich mittels eines Hebels 13 mit dem Unterflurhebel 12 der Rückenlehne 1 verbunden. Der Hebel 13 ist mit der Bodenplatte 2a und dem Unterflurhebel 12 der Rückenlehne 1 nicht verschiebbar sondern nur um Schwenkachsen 13a, 13b schwenkbar verbunden. Hierdurch bleibt der Abstand der beiden Schwenkachsen 13a, 13b zueinander beim Verschwenken der Rückenlehne 1 unverändert.

Wie insbesondere Figur 10 entnommen werden kann, wird durch den konstanten Abstand der beiden Schwenkachsen 13a, 13b erreicht, daß der hintere Bereich der Bodenplatte 2a und somit des Sitzelements 2 bei einem Verschwenken der Rückenlehne 1 abgesenkt wird.

## Patentansprüche

1. Fahrgastsitz für Personenbeförderungsfahrzeuge, insbesondere für Busse und Bahnen, mit einer verschwenkbaren Rückenlehne (1) und einem beweglich gelagerten Sitzelement (2), bei welchem Mittel (3a; 5; 7a; 12; 13) vorhanden sind, durch welche das Sitzelement (2) beim Verschwenken der Rückenlehne (1) nach hinten in seinem vorderen, der Rückenlehne (1) abgewandten Bereich anhebbar und/oder in seinem hinteren, der Rückenlehne (1) zugewandten Bereich absenkbar ist,
**dadurch gekennzeichnet,**
**daß** das Sitzelement (2) auf einem Bodenelement (3, 3a) angeordnet ist, welches im vorderen Bereich eine Anhebung (3a) aufweist.

2. Fahrgastsitz nach Anspruch 1,
**dadurch gekennzeichnet,**
**daß** die Anhebung (3a) des Bodenelements (3, 3a) einen kurvenförmigen Verlauf hat.

3. Fahrgastsitz nach Anspruch 1 oder 2,
**dadurch gekennzeichnet,**
**daß** wenigstens der vordere Teil des Sitzelements (2) mittels Rollen (4) auf dem Bodenelement (3, 3a) angeordnet ist.

4. Fahrgastsitz für Personenbeförderungsfahrzeuge, insbesondere für Busse und Bahnen, mit einer verschwenkbaren Rückenlehne (1) und einem beweglich gelagerten Sitzelement (2), bei welchem Mittel (3a; 5; 7a; 12; 13) vorhanden sind, durch welche das Sitzelement (2) beim Verschwenken der Rückenlehne (1) nach hinten in seinem vorderen, der Rückenlehne (1) abgewandten Bereich anhebbar und/oder in seinem hinteren, der Rückenlehne (1) zugewandten Bereich absenkbar ist,
**dadurch gekennzeichnet,**
**daß** das Sitzelement (2) auf einem Trägerelement (2a) angeordnet ist, welches in seinem vorderen Bereich mittels eines Hebels (5) an einem Untergestell (6) angelenkt ist.

5. Fahrgastsitz nach einem der Ansprüche 1 bis 4,
**dadurch gekennzeichnet,**
**daß** das Sitzelement (2) auf einem Grundelement (7, 7a) angeordnet ist, welches in seinem hinteren Bereich eine Absenkung (7a) aufweist.

6. Fahrgastsitz nach Anspruch 5,
**dadurch gekennzeichnet,**
**daß** die Absenkung (7a) des Grundelements (7, 7a) einen kurvenförmigen Verlauf hat.

7. Fahrgastsitz nach einem der Ansprüche 1 bis 6,
**dadurch gekennzeichnet,**
**daß** wenigstens der hintere Teil des Sitzelements (2) mittels Rollen (8) auf dem Grundelement (7, 7a) angeordnet ist.

8. Fahrgastsitz für Personenbeförderungsfahrzeuge, insbesondere für Busse und Bahnen, mit einer verschwenkbaren Rückenlehne (1) und einem beweglich gelagerten Sitzelement (2), bei welchem Mittel (3a; 5; 7a; 12; 13) vorhanden sind, durch welche das Sitzelement (2) beim Verschwenken der Rückenlehne (1) nach hinten in seinem vorderen, der Rückenlehne (1) abgewandten Bereich anhebbar und/oder in seinem hinteren, der Rückenlehne (1) zugewandten Bereich absenkbar ist,
**dadurch gekennzeichnet,**
**daß** das Sitzelement (2) auf einer Bodenplatte (2a) angeordnet ist, welche im vorderen Bereich um eine Schwenkachse (11) schwenkbar an einem Träger (10) befestigt ist, wobei die Bodenplatte (2a) im hinteren Bereich an einem Unterflurhebel (12) der Rückenlehne (1) dreh- und verschiebbar befestigt ist, welcher sich unterhalb der Schwenkachse (1a) der Rückenlehne erstreckt.

9. Fahrgastsitz nach Anspruch 8,
**dadurch gekennzeichnet,**
**daß** die Bodenplatte (2a) im hinteren Bereich mittels eines Hebels (13) mit dem Unterflurhebel (12) der Rückenlehne (1) verbunden ist.
